# EUROPEAN PATENT SPECIFICATION

(11) **EP 2 546 958 B1**
(45) Date of publication and mention of the grant of the patent: **18.10.2017**
(21) Application number: 10847417.2
(22) Date of filing: 10.03.2010
(51) Int. Cl.: H02K 1/27, H02K 11/215, H02K 15/10, H02K 5/173

(54) **ELECTRIC MOTOR ROTOR, ELECTRIC MOTOR, AIR CONDITIONER, AND METHOD OF MANUFACTURING THE ELECTRIC MOTOR ROTOR**
ELEKTOMOTORLÄUFER, ELEKTROMOTOR, KLIMAANLAGE UND VERFAHREN ZUR HERSTELLUNG DES ELEKTROMOTORLÄUFERS
ROTOR DE MOTEUR ÉLECTRIQUE, MOTEUR ÉLECTRIQUE, CONDITIONNEUR D'AIR, ET PROCÉDÉ DE FABRICATION DE ROTOR DE MOTEUR ÉLECTRIQUE

(43) Date of publication of application: 16.01.2013
(73) Proprietor: Mitsubishi Electric Corporation, Tokyo 100-8310 (JP)
(72) Inventor: KAWAKUBO,Mamoru, Tokyo 100-8310 (JP); YAMAMOTO,Mineo, Tokyo 100-8310 (JP); ISHII,Hiroyuki, Tokyo 100-8310 (JP); YAMAZAKI,Tougo, Tokyo 100-8310 (JP); ASOU,Hiroki, Tokyo 100-8310 (JP)
(74) Representative: Pfenning, Meinig & Partner mbB
(86) International application number: PCT/JP2010/054000
(87) International publication number: WO 2011/111187

(56) References cited:
- JP-A- 2000 299 959
- JP-A- 2005 033 999
- JP-A- 2006 121 807
- JP-A- 2006 121 857
- JP-A- 2007 221 866
- JP-A- 2007 221 866
- JP-A- 2008 263 698
- JP-A- 2010 011 637
- US-A1- 2002 096 953

## Description

### Field

The present invention relates to an electric motor rotor in which a roller bearing is used and relates to an electric motor rotor suitable for an electric motor driven by an inverter. Further, the present invention relates to an electric motor in which the electric motor rotor is used, a method of manufacturing the electric motor rotor, and an air conditioner mounted with the electric motor.

### Background

Conventionally, when an electric motor is operated using an inverter, for the purpose of realizing a reduction in noise of the electric motor caused according to switching of transistors in a power circuit, a carrier frequency of the inverter is set high. As the carrier frequency is set higher, a shaft voltage generated based on high-frequency induction in a shaft of the electric motor increases and a potential difference present between an inner ring and an outer ring of a roller bearing that supports the shaft increases. Therefore, an electric current easily flows to the roller bearing. There is a problem in that the electric current flowing to the roller bearing causes corrosion called electrolytic corrosion on both tracks of the inner ring and the outer ring and a rolling contact surface of a rolling element (balls or rollers that roll between the inner and outer rings) and deteriorates the durability of the roller bearing.

Therefore, to obtain an electric motor having a simple configuration and easily assembled that can prevent an electric current from flowing to a roller bearing provided between a shaft and a motor case and prevent electrolytic corrosion from occurring in the roller bearing, an electric motor including a stator formed by winding a coil, a frame that fixes the stator, a rotor opposed to the stator via a very small air gap, a shaft fixedly attached with the rotor and rotatably born via the roller bearing, and a bearing bracket that supports the roller bearing via an insulating material is provided, wherein a concave section is provided on a side of the bearing bracket in contact with the insulating material, and a convex section corresponding to the concave section of the bearing bracket is provided in the insulating material, such that the convex section of the insulating material is fit in the concave section of the bearing bracket and fixed (see, for example, Patent Literature 1).

An electrolytic corrosion preventing roller bearing in which an insulating coating film is formed on an inner ring fitting surface or an outer ring fitting surface of a roller bearing or both of the inner ring fitting surface and the outer ring fitting surface is proposed, wherein a boundary surface between a circumferential surface of the inner ring fitting surface or a circumferential surface of the outer ring fitting surface and a chamfered section assumes a gentle taper surface or an arcuate surface having a large curvature radius, and the electrolytic corrosion preventing roller bearing has, on at least one fitting surface, an insulating coating film of an inorganic compound by thermal spraying (see, for example, Patent Literature 2).
JP2006121807A discloses a manufacturing method for a rotor of a motor that can reduce cost by improving the productivity and improve the quality.
JP2007221866A discloses a method to reduce the cost and noise of the rotor of a motor while enhancing productivity and quality.
JP2005033999A discloses that an insulating material of insulating sleeves is interposed in a circuit allowing a current to flow in the case that the electric potential of the rotary shaft is high generated. As a result, the current is prevented from flowing in each of the rolling bearings, so that the electric collosion can be prevented from its generation.
US2002096953A1 discloses a first cavity portion for molding a first inner peripheral surface which is molded continuously from an opening of a bearing hole portion is provided in a first mold block. In a second mold block, a cavity C having an outside diameter greater than an inside diameter of the first peripheral surface and formed by the first cavity portion and a second cavity portion at the time of mold closing is coaxially positioned, and a plurality of shape portions for forming stepped portions are provided in such a manner as to extend toward the first mold block. A predetermined resin material in a molten state is introduced into the cavity to effect molding. JP2010011637A provides a small, light and highly precise permanent magnet rotary electric machine and an elevator winding machine system using it.

### Citation List

### Patent Literature

Patent Literature 1: Japanese Patent Application Laid-open No. 2000-156952
Patent Literature 2: Japanese Patent Application Laid-open No. 59-103023

### Summary

### Technical Problem

However, the electric motor disclosed in Patent Literature 1 has the configuration in which the concave section is provided on the side of the bearing bracket in contact with the insulating material, the convex section corresponding to the concave section of the bearing bracket is provided in the insulating material, and the convex section of the insulating material is fitted and fixed in the concave section of the bearing bracket. Therefore, there is a problem in that, although the electric motor has a single configuration and is easily assembled, the insulating material easily comes off the bearing bracket.

In the electrolytic corrosion preventing roller bearing disclosed in Patent Literature 2, the boundary surface between the circumferential surface of the inner ring fitting surface or the peripheral surface of the outer ring fitting surface and the chamfered section assumes the gentle taper surface or the arcuate surface having the large curvature radius and the insulating coating film of the inorganic compound by thermal spraying is formed on at least one fitting surfaces. Therefore, there is a problem in that costs increase.

The present invention has been devised to solve the problems explained above and it is an object of the present invention to provide an electric motor rotor, an electric motor, a method of manufacturing the electric motor rotor, and an air conditioner in which an insulating sleeve applied to a shaft for performing insulation between a roller bearing and a shaft to suppress electrolytic corrosion of a bearing can be surely fixed by a simple method.

### Solution to Problem

In order to solve the aforementioned problems, an electric motor rotor, in which a rotor magnet and a shaft are integrated by a resin section and roller bearings are arranged in the shaft, according to the independent claim is provided, one aspect of the present invention is constructed such that an insulating sleeve is provided between the shaft and the roller bearings, and the insulating sleeve is integrated and fixed by the resin section.

### Advantageous Effects of Invention

In the electric motor rotor according to the present invention, the insulating sleeve is provided between the shaft and the roller bearing and integrated and fixed by the resin section. Therefore, there is an effect of preventing a shaft current flowing through the roller bearing, suppressing electrolytic corrosion, and preventing occurrence of abnormal sound. Further, there is an effect that the insulating sleeve can be surely fixed by a simple method.

### Brief Description of Drawings

FIG. 1 is a diagram showing a first embodiment and is a sectional view of an electric motor 100.
FIG. 2 is a diagram showing the first embodiment and is a perspective view of a stator 40.
FIG. 3 is a diagram showing the first embodiment and is a sectional view of a rotor 20.
FIG. 4 is a diagram showing the first embodiment and is an enlarged sectional view of a counter load side end of a shaft 23.
FIG. 5 is a diagram showing the first embodiment and is a diagram showing an insulating sleeve 26 ((a) is a front view and (b) is a side view).
FIG. 6 is a diagram showing the first embodiment and is a diagram showing a rotor resin magnet 22 ((a) is a left side view, (b) is an A-A sectional view of (a), and (c) is a right side view).
FIG. 7 is a diagram showing the first embodiment and is a diagram showing a resin magnet for position detection 25 ((a) is a left side view, (b) is a front view, and (c) is an A section enlarged view of (b)).
FIG. 8 is a diagram showing the first embodiment and is a sectional view of the rotor 20 according to a first modification.
FIG. 9 is a diagram showing the first embodiment and is a sectional view of the rotor 20 according to a second modification.
FIG. 10 is a diagram showing the first embodiment and is a front view of the insulating sleeve 26 used in the rotor 20 according to the second modification.
FIG. 11 is a diagram showing the first embodiment and is a sectional view of the rotor 20 according to a third modification.
FIG. 12 is a diagram showing the first embodiment and is a sectional view of the rotor 20 according to a fourth modification.
FIG. 13 is a diagram showing the first embodiment and is a configuration diagram of a driving circuit 200 that drives the electric motor 100.
FIG. 14 is a diagram showing the first embodiment and is a diagram showing a manufacturing process for the rotor 20.
FIG. 15 is a diagram showing a second embodiment and is a configuration diagram of an air conditioner 300.

### Description of Embodiments

### First Embodiment.

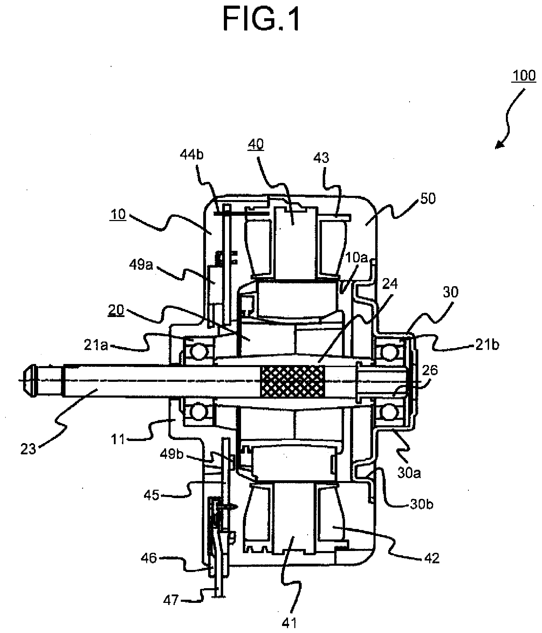

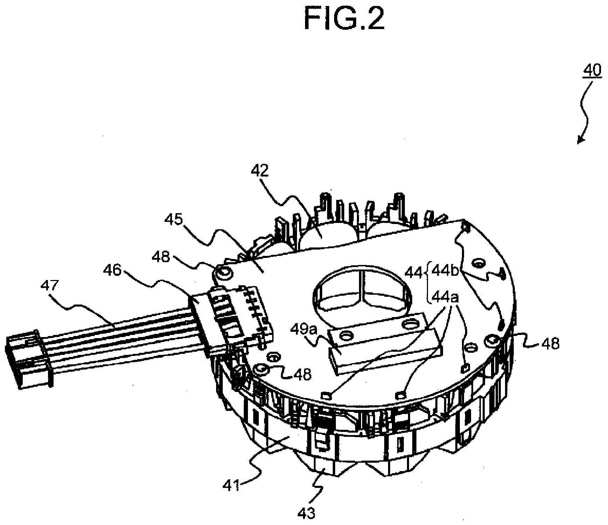

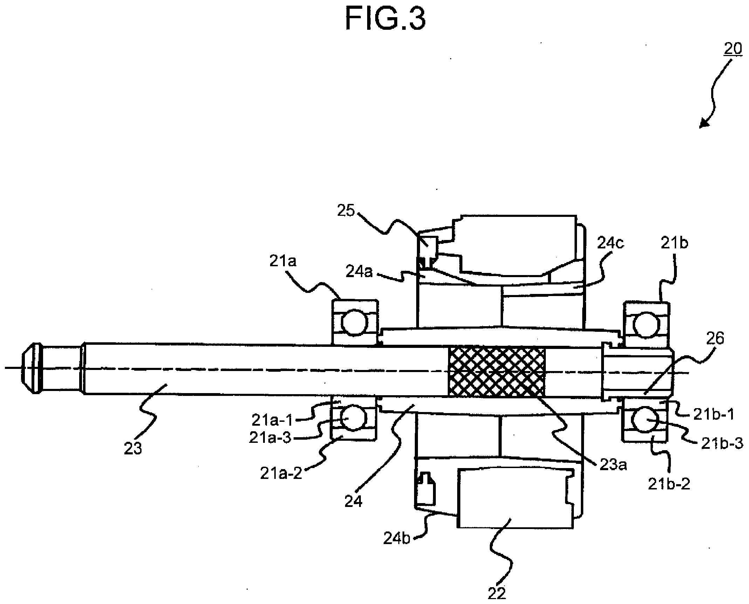

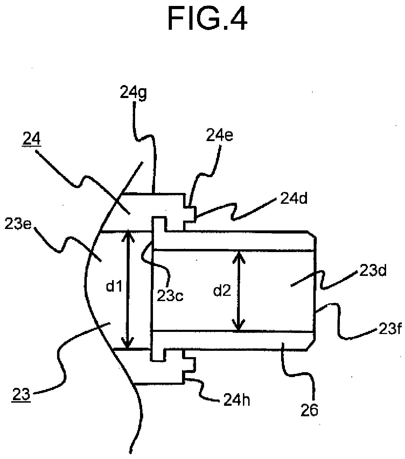

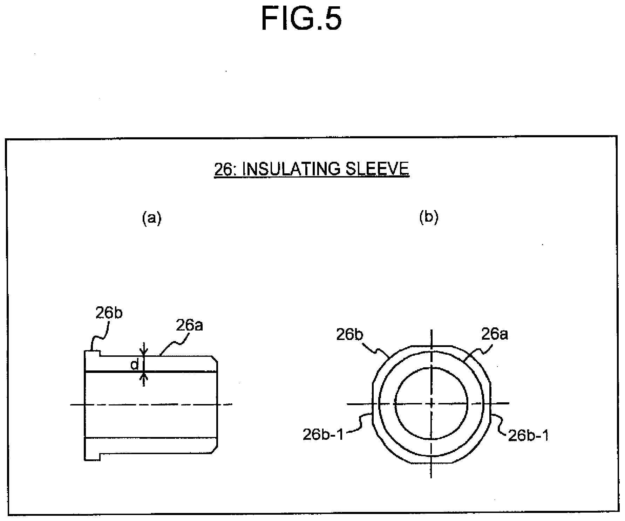

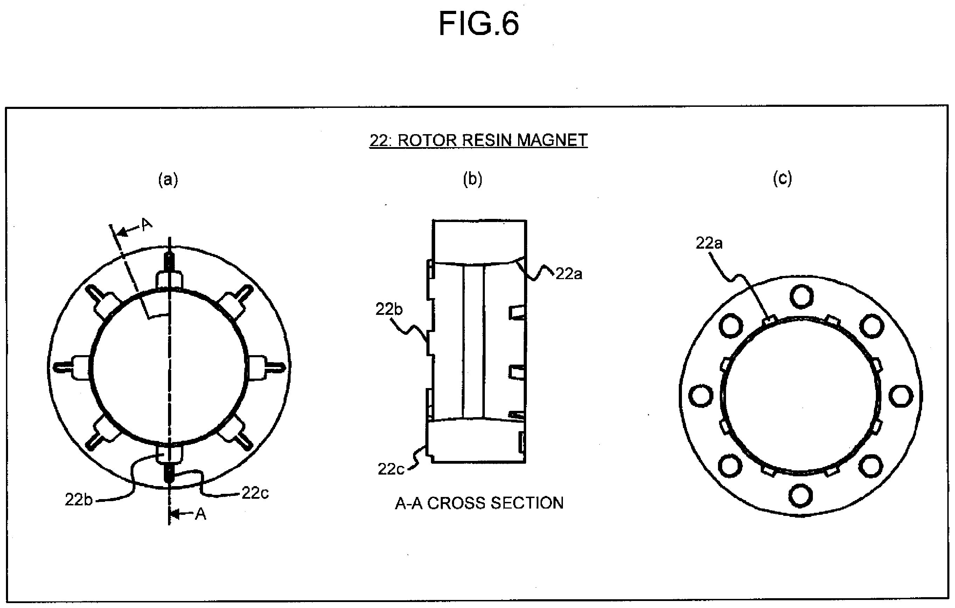

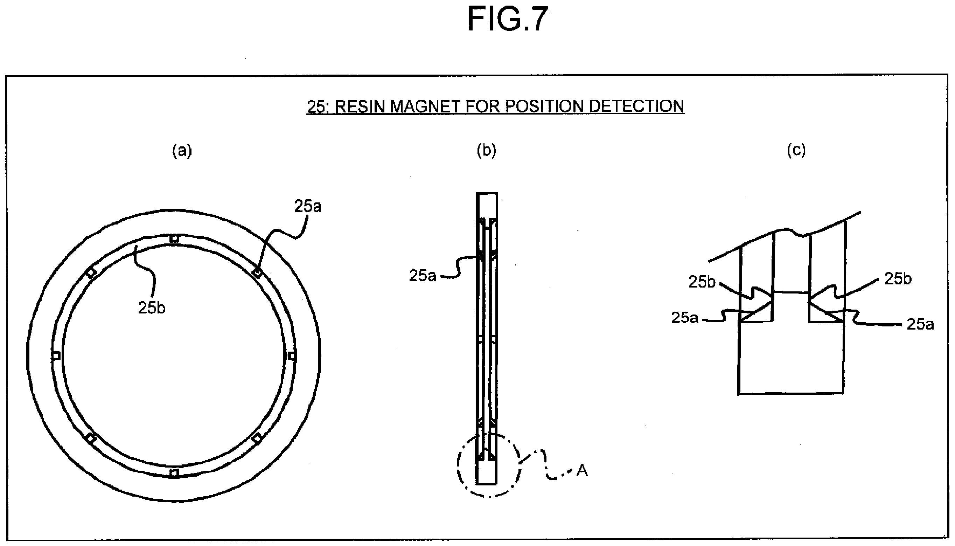

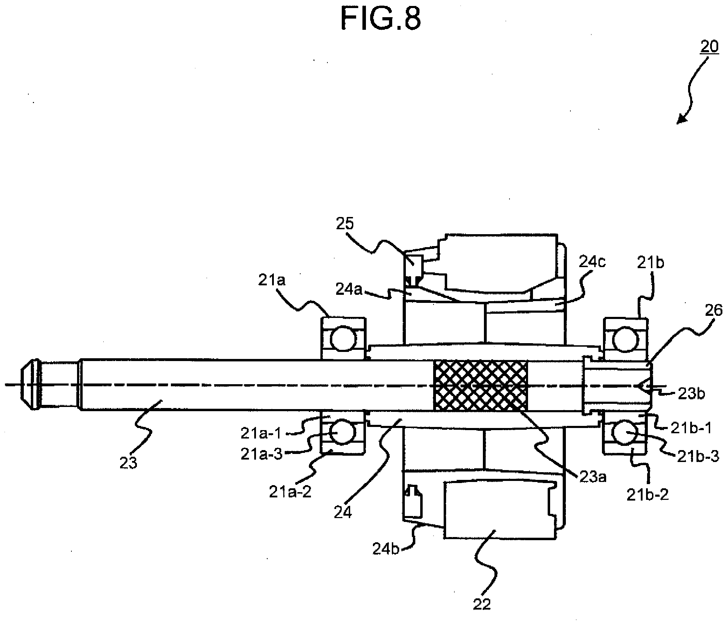

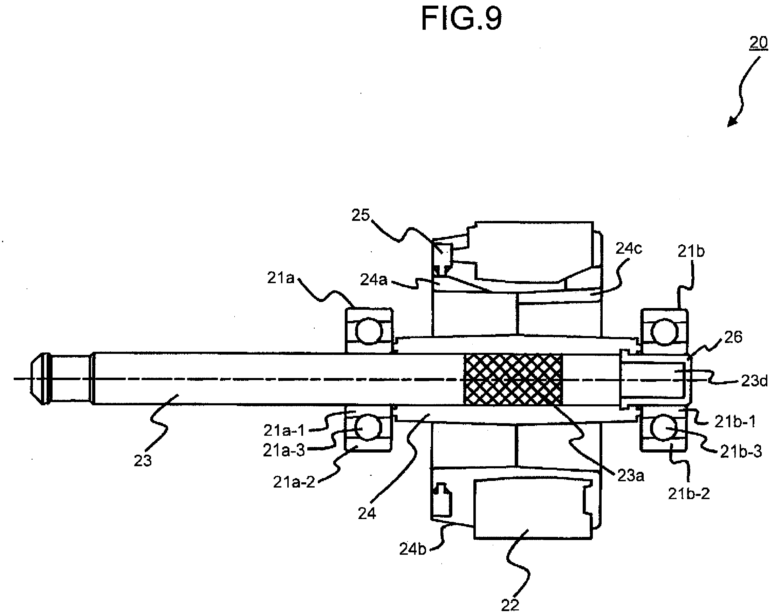

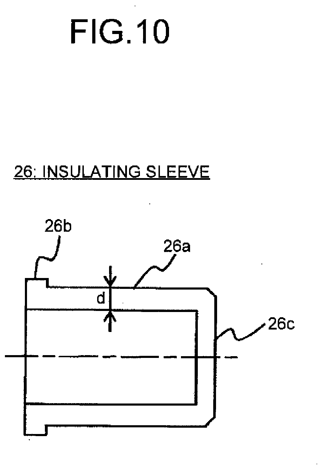

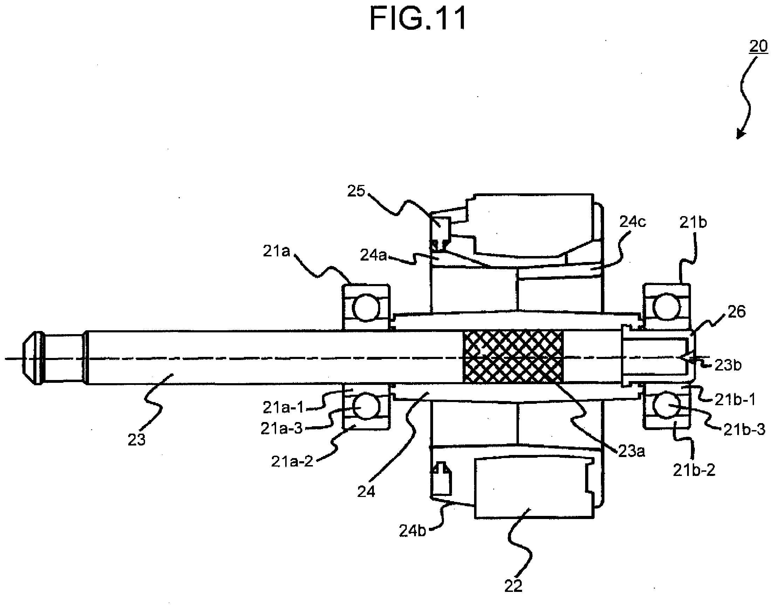

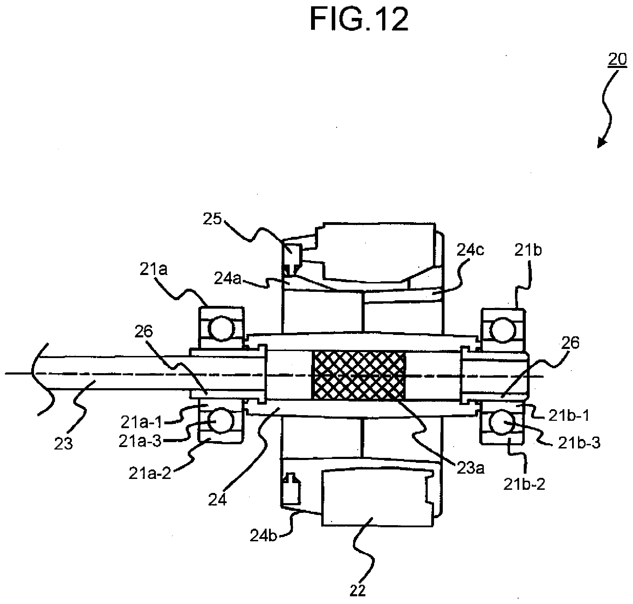

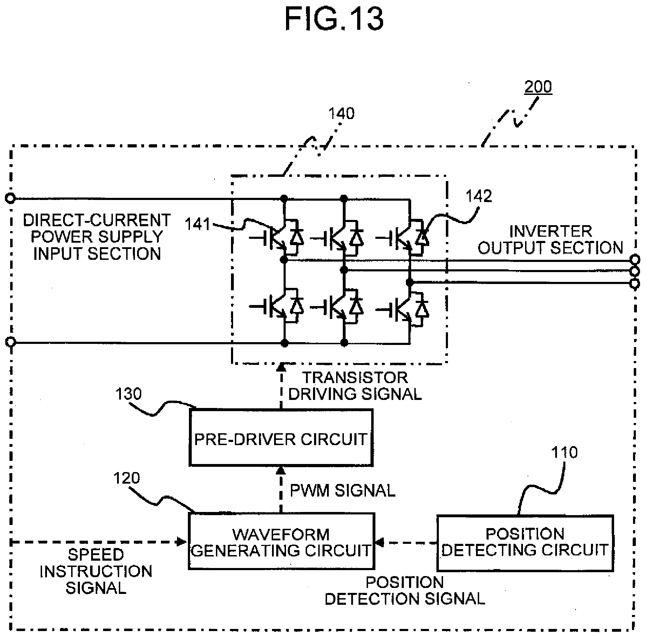

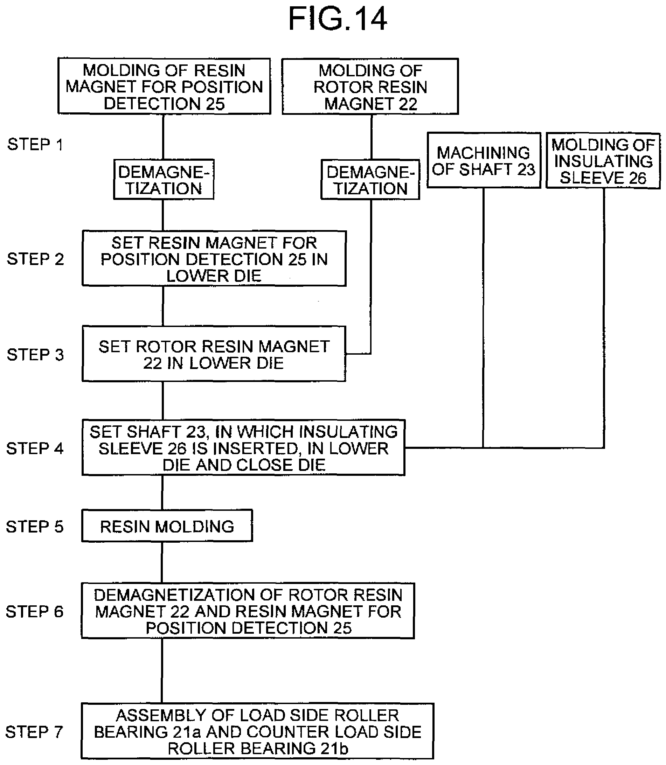

FIGS. 1 to 14 are diagrams showing a first embodiment. FIG. 1 is a sectional view of an electric motor 100. FIG. 2 is a perspective view of a stator 40. FIG. 3 is a sectional view of a rotor 20. FIG. 4 is an enlarged sectional view of a counter load side end of a shaft 23. FIG. 5 is a diagram showing an insulating sleeve 26 ((a) is a front view and (b) is a side view). FIG. 6 is a diagram showing a rotor resin magnet 22 ((a) is a left side view, (b) is an A-A sectional view of (a), and (c) is a right side view). FIG. 7 is a diagram showing a resin magnet for position detection 25 ((a) is a left side view, (b) is a front view, and (c) is an A section enlarged view of (b)). FIG. 8 is a sectional view of the rotor 20 according to a first modification. FIG. 9 is a sectional view of the rotor 20 according to a second modification. FIG. 10 is a front view of the insulating sleeve 26 used in the rotor 20 according to the second modification. FIG. 11 is a sectional view of the rotor 20 according to a third modification. FIG. 12 is a sectional view of the rotor 20 according to a fourth modification. FIG. 13 is a configuration diagram of a driving circuit 200 that drives the electric motor 100. FIG. 14 is a diagram showing a manufacturing process for the rotor 20.

The configuration of the electric motor 100 is explained. As shown in FIG. 1, the electric motor 100 includes a mold stator 10, the rotor 20 (defined as an electric motor rotor), and a bracket 30 of metal attached to one axis direction end (hereinafter referred to just as "axis direction one end") of the mold stator 10. The electric motor 100 is, for example, a brushless DC motor including a permanent magnet in the rotor 20 and driven by an inverter.

The mold stator 10 is opened at the axis direction one end (the right side in FIG. 1). The rotor 20 is inserted from this opening. At the other axis direction end (hereinafter referred to just as "axis direction other end") (the left side in FIG. 1) of the mold stator 10, a hole (not shown in the figure) slightly larger than the diameter of the shaft 23 of the rotor 20 is opened. In the rotor 20 inserted from the axis direction one end of the mold stator 10, the shaft 23 on a load side sticks out to the outside (the left side in FIG. 1) from the hole at the axis direction other end of the mold stator 10. A load side roller bearing 21a (an example of a roller bearing) of the rotor 20 is pushed in until it comes into contact with a bearing supporting section 11 at an axis direction end on a counter opening side of the mold stator 10. At this point, the load side roller bearing 21a is supported by the bearing supporting section 11 formed at the axis direction end on the counter opening end side of the mold stator 10.

In the rotor 20, a counter load side roller bearing 21b (an example of a roller bearing) is attached to the shaft 23 on the counter load side (the right side in FIG. 1) (in general, attached by press-fitting).

As explained below in detail, the insulating sleeve 26 is provided between the counter load side roller bearing 21b and the shaft 23 on the counter load side.

The bracket 30 that closes the opening of the mold stator 10 and supports the counter load side roller bearing 21b is press-fitted into the mold stator 10. The bracket 30 supports the counter load side roller bearing 21b with a roller-bearing supporting section 30a. The press-fitting of the bracket 30 into the mold stator 10 is performed by press-fitting a press-fitting section 30b, which has a substantially ring shape and a C shape in cross section, of the bracket 30 into the opening side of an inner circumferential section 10a (a mold resin section) of the mold stator 10. The outer diameter of the press-fitting section 30b of the bracket 30 is larger than the inner diameter of the inner circumferential section 10a of the mold stator 10 by a press-fitting margin. The material of the bracket 30 is metal, for example, galvanized steel sheet. However, the material is not limited to the galvanized steel sheet.

This embodiment has a characteristic in the structure of the rotor 20. Therefore, the mold stator 10 is explained briefly.

The mold stator 10 includes the stator 40 and mold resin 50 for molding. As the mold resin 50, thermosetting resin such as unsaturated polyester resin is used. Low-pressure molding is desirable for the stator 40 because the stator 40 is attached with a substrate or the like explained below and has low-strength structure. Therefore, the thermosetting resin such as the unsaturated polyester resin is used.

The stator 40 shown in Fig. 2 has a configuration explained below.
(1) A belt-like stator iron core 41 in which an electromagnetic steel sheet having thickness of about 0.1 to 0.7 millimeter is perforated in a belt shape and laminated by caulking, welding, bonding, or the like is manufactured. The belt-like stator iron core 41 includes a plurality of teeth (not shown). The inner side to which a concentratedly-wound coil 42 explained below is applied is the teeth.
(2) An insulating section 43 is applied to the teeth. The insulating section 43 is molded integrally with or separately from the stator iron core 41 using thermoplastic resin such as PBT (polybulylene terephthalate).
(3) The concentratedly-wound coil 42 is wound around the teeth to which the insulating section 43 is applied. A plurality of the concentratedly-wound coils 42 are connected to form winding of three-phase single Y connection. However, distributed winding is also acceptable.
(4) Because the winding is the three-phase single Y connection, terminals 44 (power supply terminals 44a to which a power supply is supplied and neutral terminals 44b to which the coils of respective phases (a U phase, a V phase, and a W phase) are connected) are assembled to the connection side of the insulating section 43. There are three power supply terminals 44a and three neutral terminals 44b.
(5) A substrate 45 is attached to the insulating section 43 on the connection side (a side to which the terminals 44 are assembled). The substrate 45 assembled with a lead wire leading component 46 for leading a lead wire 47 is assembled to the insulating section 43 to configure the stator 40. A chamfered square pillar 48 of the insulating section 43 formed in the stator iron core 41 is inserted into a square pillar insertion hole (not shown in the figure) included in the substrate 45, whereby positioning in a rotating direction is performed. The substrate 45 is set on a substrate setting surface (not shown) of the insulating section 43, whereby a position in the axis direction is determined. The substrate 45 and the insulating section 43 are fixed by thermally welding the square pillar 48 projecting from the substrate 45 and are electrically jointed by soldering a section of the terminals 44 included in the stator 40 projecting from the substrate 45. An IC 49a (a driving element) that drives the electric motor 100 (e.g., a brushless DC motor), a Hall IC 49b (a position detecting element) that detects the position of the rotor 20, and the like are mounted on the substrate 45. The IC 49a, the Hall IC 49b, and the like are defined as electronic components.

The configuration of the rotor 20 is explained. As shown in FIG. 3, the rotor 20 includes the shaft 23 applied with a knurl 23a, a ring-like rotor resin magnet 22 (an example of a rotor magnet), a ring-like resin magnet for position detection 25 (an example of a magnet for position detection), and a resin section 24 for integrally molding these components.

The ring-like rotor resin magnet 22, the shaft 23, and the resin magnet for position detection 25 are integrated by the resin section 24. At this point, the resin section 24 contains a center cylindrical section 24g (a section corresponding to the rotor resin magnet 22) explained below, which is formed in the outer circumference of the shaft 23, and a plurality of ribs (not shown in the figure) in the axis direction radially formed in the radial direction centering on the shaft 23 for coupling the rotor resin magnet 22 to the center cylindrical section 24g. Hollows piercing through in the axis direction are formed among the ribs.

As resin used in the resin section 24, thermoplastic resin such as PBT (polyethylene terephthalate) or PPS (polyphenylene sulfide) is used. Materials obtained by mixing a glass filler in these kinds of resin are also suitable.

The counter load side roller bearing 21b is attached to the shaft 23 on the counter load side (the right side in FIG. 3) (in general, by press-fitting). A load side roller bearing 21a is attached to the shaft 23 on the load side to which a fan and the like are attached (the left side in FIG. 3).

The load side roller bearing 21a and the counter load side roller bearing 21b are publicly-known roller bearings.

The load side roller bearing 21a includes an inner ring 21a-1 press-fitted into the shaft 23, an outer ring 21a-2 supported by the bearing supporting section 11 of the mold stator 10, and a rolling element 21a-3 that rolls between the inner ring 21a-1 and the outer ring 21a-2. Balls or rollers are used as the rolling element 21a-3.

The counter load side roller bearing 21b includes an inner ring 21b-1 press-fitted into the shaft 23 via the insulating sleeve 26, an outer ring 21b-2 supported by the bearing supporting section 30a of the bracket 30, and a rolling element 21b-3 that rolls between the inner ring 21b-1 and the outer ring 21b-2. Balls or rollers are used as the rolling element 21b-3.

This embodiment has a characteristic in interposing the insulating sleeve 26 between the counter load side roller bearing 21b supported by the bracket 30 of metal (having electric conductivity) and the shaft 23 and suppressing a shaft current using the insulating sleeve 26 as insulation to thereby suppress occurrence of electrolytic corrosion of the counter load side roller bearing 21b.

Further, the insulating sleeve 26 provided between the counter load side roller bearing 21b and the shaft 23 is inserted near the counter load side end of the shaft 23. When the shaft 23, the ring-like rotor resin magnet 22, and the ring-like resin magnet for position detection 25 are integrated by the resin section 24, the insulating sleeve 26 is also integrated.

In this way, the insulating sleeve 26 inserted into the shaft 23 is integrated and fixed by the resin section 24. Therefore, the insulating sleeve 26 is fixed extremely simply and fixed surely, and it is less likely that the insulating sleeve 26 comes off the shaft 23.

This embodiment includes the rotor 20 not including the ring-like resin magnet for position detection 25.

In the load side roller bearing 21a, the outer ring 21a-2 is supported by the bearing supporting section 11 (formed by the mold resin 50) of the mold stator 10. Therefore, stray capacitance is extremely small because the bearing supporting section is an insulating material. Consequently, a shaft current flowing through the bearing is extremely small even if the shaft 23 is not insulated.

FIG. 4 is a sectional view showing a counter load side end of the shaft 23 in enlargement. In FIG. 4, a diameter d2 of a counter load side end 23d of the shaft 23, on which the counter load side roller bearing 21b is held via the resin section 24, is set smaller than a diameter d1 of a center section 23e, on which the rotor resin magnet 22 is held via the resin section 24, to provide a step 23c.

A dimension between a counter load side end face 23f (an example of an axis direction end face) of the shaft 23 and the step 23c is longer than the thickness (the shaft direction length) of the counter load side roller bearing 21b. In an example shown in FIG. 4, the counter load side end face 23f of the shaft 23 is exposed.

In the resin section 24, a bearing contact surface 24d, which serves as a positioning reference in the axis direction during insertion of the shaft 23 of the counter load side roller bearing 21b into the counter load side end 23d, is formed in a counter load side end of the center cylindrical section 24g of the resin section 24 formed in the outer circumference centering on a knurl section of the shaft 23.

In the center cylindrical section 24g of the resin section 24 formed in the outer circumference centering on the Knurl section of the shaft 23, a step section 24e is provided between the outer circumferential section of the center cylindrical section 24g and the bearing contact surface 24d.

It is essential that the diameter of the step section 24e is smaller than the inner diameter of the outer ring 21b-2 of the counter load side roller bearing 21b. In the rotor 20 shown in FIG. 3, the diameter of the step section 24e is set substantially the same as or slightly smaller than the outer diameter of the inner ring 21b-1 of the counter load side roller bearing 21b.

In general, in a roller bearing, a cover is provided between an outer ring and an inner ring to prevent grease from leaking to the outside from the inside of the roller bearing or prevent dust and the like from intruding into the inside of the roller bearing from the outside. The cover is located further on the inner side than both end faces of the roller bearing.

Therefore, even if the diameter of the step section 24e is set larger than the outer diameter of the inner ring 21b-1 of the counter load side roller bearing 21b, a section larger than the outer diameter of the inner ring 21b-1 does not come into contact with the counter load side roller bearing 21b. Therefore, the diameter of the step section 24e is practically set substantially the same as or slightly smaller than the outer diameter of the inner ring 21b-1 of the counter load side roller bearing 21b.

By providing the step section 24e, when the shaft 23, the rotor resin magnet 22, and the resin magnet for position detection 25 are integrally molded by resin, if the bearing contact surface 24d of the center cylindrical section 24g of the resin section 24 is formed by a bush, the bearing contact surface 24d is formed by the bush up to the step section 24e. Therefore, a fitting surface of a die becomes a counter load side end face 24h of the center cylindrical section 24g. Therefore, even if burrs occur on the fitting surface of the die, because the counter load side roller bearing 21b is separated from the counter load side end face 24h, which is the fitting surface of the die, by the thickness of the step section 24e, the burrs do not come into contact with the counter load side roller bearing 21b. Therefore, it is less likely that the counter load side roller bearing 21b is adversely affected.

In some case, when the rotor 20 receives a thermal shock, the center cylindrical section 24g of the resin section 24 is cracked. However, it is possible to cope with even such a case by providing the step section 24e in the center cylindrical section 24g and increasing the thickness in the radial direction of the center cylindrical section 24g in the step section 24e.

The diameter of the step section 24e is set smaller than the inner diameter of the outer rings 21a-2 and 21b-2 of the load side roller bearing 21a and the counter load side roller bearing 21b. Therefore, the thickness in the radial direction of the center cylindrical section 24g in the step section 24e can be set larger than the inner diameter of the outer rings 21a-2 and 21b-2.

The configuration of the insulating sleeve 26 is explained with reference to FIG. 5. As shown in FIG. 5, the insulating sleeve 26 has a substantially cylindrical shape. In the insulating sleeve 26, a brim section 26b ((a) and (b) of FIG. 5) having a diameter larger than an outer circumferential section 26a of the insulating sleeve 26 is provided at an end on the center cylindrical section 24g side of the resin section 24. When the insulating sleeve 26 is integrated by the resin section 24, the center cylindrical section 24g covers and integrates the brim section 26b of the insulating sleeve 26. Therefore, the movement in the axis direction of the insulating sleeve 26 is suppressed.

As shown in (b) of FIG. 5, the brim section 26b of the insulating sleeve 26 includes substantially flat cutout sections 26b-1 in, for example, four places at substantially equal intervals in the circumferential direction. Consequently, the movement in the circumferential direction of the insulating sleeve 26 is suppressed. The number, the shape, and the arrangement interval of the cutout sections 26b-1 can be arbitrary.

As the material of the insulating sleeve 26, PBT (polybutylene terephthalate), PPS (polyphenylene sulfide), LCP (liquid crystal polymer), or the like is used. Materials obtained by mixing a glass filler in these kinds of resin are also suitable.

Thickness d ((a) of FIG. 5) in the radial direction of the insulating sleeve 26 is, for example, 1 to 1.5 millimeters. However, the thickness d is not limited to this range.

FIG. 6 is a diagram showing the rotor resin magnet 22. (a) of FIG. 6 is a left side view, (b) of FIG. 6 is an A-A sectional view of (a) of FIG. 6, and (c) of FIG. 6 is a right side view. The configuration of the ring-like rotor resin magnet 22 is explained with reference to FIG. 6. In the rotor resin magnet 22, cutouts 22a for securing coaxiality of the shaft 23 and the rotor resin magnet 22 during die closing in resin molding are formed at axis direction one end of the inner circumference of the rotor resin magnet 22 (the right side in (b) of FIG. 6). In an example shown in FIG. 6, the cutouts 22a are formed in eight places in the circumferential direction at substantially equal intervals ((c) of FIG. 6).

In the rotor resin magnet 22, pedestals 22b on which the resin magnet for position detection 25 is set are formed in the circumferential direction at substantially equal intervals on an end face at the axis direction other end (the left side in (b) of FIG. 6).

The pedestals 22b are formed from places near the inner circumference of the rotor resin magnet 22 toward the outer circumference. Positioning protrusions 22c extend in the radial direction from the distal ends of the pedestals 22b toward places near the outer circumferential section of the rotor resin magnet 22. The positioning protrusions 22c are used for positioning in the circumferential direction (the rotating direction) of the rotor resin magnet 22 when the rotor magnet, the magnet for position detection, and the shaft are integrally molded by the resin section 24.

The configuration of the ring-like resin magnet for position detection 25 is explained with reference to FIG. 7. (a) of FIG. 7 is a left side view of the resin magnet for position detection 25. (b) of FIG. 7 is a front view of the resin magnet for position detection 25. (c) of FIG. 7 is an A section enlarged view of (b) of FIG. 7.

The resin magnet for position detection 25 includes steps 25b at axis direction both ends on the inner circumference side. The steps 25b are necessary because a part of the resin section 24 is filled in the step 25b on an axis direction end side of the rotor 20 and prevents the resin magnet for position detection 25 from coming off in the axis direction.

In FIG. 7, the resin magnet for position detection 25 including the steps 25b at both ends is shown. However, the step 25b only has to be present at one of the ends and located on the axis direction end side of the rotor 20. However, the resin magnet for position detection 25 including the steps 25b at both the ends is excellent in workability because it is possible to set the resin magnet for position detection 25 without worrying about the front and the back thereof in setting the resin magnet for position detection 25 in a die during the integral molding of the rotor 20 by the resin section 24.

The resin magnet for position detection 25 includes, in the steps 25b, at substantially equal intervals in the circumferential direction, eight ribs 25a (substantially triangular in cross section) that function as a whirl-stop in the circumferential direction when embedded in the resin section 24. However, the number, the shape, and the arrangement interval of the ribs 25a can be arbitrary.

As shown in FIG. 3, in the resin section 24, an inner-circumference pressing section 24a for a die that holds the inner circumference of the resin magnet for position detection 25, a taper section 24b for making it easy to set the resin magnet for position detection 25 in a die (a lower die), and a resin injecting section 24c for resin injection during resin molding are formed after the resin molding.

The rotor resin magnet 22 is molded by mixing a magnetic material in thermoplastic resin. As showing in FIG. 6, the cutouts 22a are provided in a taper shape in the inner circumference from axis direction one end face. The pedestals 22b on which the resin magnet for position detection 25 is set are provided on the axis direction other end face on the opposite side of the axis direction one end face where the cutouts 22a are provided.

The resin magnet for position detection 25 can be separated from the end face of the rotor resin magnet 22 by the pedestals 22b of the rotor resin magnet 22 integrally molded with the shaft 23. The thickness of the resin magnet for position detection 25 can be minimized and the resin magnet for position detection 25 can be arranged in an arbitrary position. Costs can be reduced by filling the thermoplastic resin more inexpensive than the rotor resin magnet 22.

As shown in FIG. 7, the resin magnet for position detection 25 includes the steps 25b on both the sides in the thickness direction and includes, in the steps 25b on both the sides, the ribs 25a that function as a whirl-stop when embedded with resin. The coaxiality of the inner circumference of the resin magnet for position detection 25 and the outer circumference of the resin magnet for position detection 25 is accurately set.

When the resin magnet for position detection 25 is molded integrally with the shaft 23, the resin (the resin section 24) is filled in a taper shape in the outer circumference of the resin magnet for position detection 25 to cope with fluctuation in the outer circumference of the resin magnet for position detection 25. The filled resin is blocked by an axis direction end face (the outer side) on one side of the resin magnet for position detection 25 and the axis direction both end faces of the rotor resin magnet 22. Therefore, it is possible to suppress burrs from occurring on the outer circumference of the rotor resin magnet 22 and improvement of quality is realized.

A gate port used during the integral molding with the shaft 23 is arranged further on the inner side than the inner circumference of the rotor resin magnet 22 and the resin injecting section 24c is arranged in a convex shape. Therefore, concentration of pressure is relaxed, the resin is easily filled, and the convex section of the resin injecting section 24c can be used for positioning as well.

FIG. 8 is a sectional view of the rotor 20 according to a first modification. The rotor 20 according to the first modification is different from the rotor 20 shown in FIG. 3 in that a center hole 23b is formed at the counter load side end of the shaft 23.

When the shaft 23, the rotor resin magnet 22, and the resin magnet for position detection 25 are integrated (molded) by the resin section 24, the center hole 23b of the shaft 23 is set in a die (an upper die). Consequently, the coaxiality of the rotor resin magnet 22 and the shaft 23 is improved.

Center holes 23b can be formed at both the ends of the shaft 23.

FIG. 9 is a sectional view of the rotor 20 according to a second modification. The rotor 20 according to the second modification is different from the rotor 20 shown in FIG. 3 in that the insulating sleeve 26 covers the entire counter load side end 23d of the shaft 23.

As shown in FIG. 10, the insulating sleeve 26 is formed in a cap shape opened at one end in the axis direction and closed at the other end. Therefore, during the molding of the rotor 20 by the resin section 24, an end face 26c of the insulating sleeve 26 is pressed by a die.

An advantage of the insulating sleeve 26 shown in FIG. 10 is that, even if the diameter d2 of the counter load side end 23d of the shaft 23 where the counter load side roller bearing 21b is held via the insulating sleeve 26 and the shaft diameter d1 of the center cylindrical section 24g are the same and the step 23c (FIG. 4) is not provided, when the insulating sleeve 26 is inserted into the shaft 23, a position in the axis direction of the insulating sleeve 26 with respect to the shaft 23 is determined by pushing in the insulating sleeve 26 until the insulating sleeve 26 comes into contact with the end face of the counter load side end 23d of the shaft 23.

In the insulating sleeve 26 shown in FIGS. 3 and 8, if the step 23c (FIG. 4) is not provided in the shaft 23, when the insulating sleeve 26 is inserted into the shaft 23, positioning in the axis direction of the insulating sleeve 26 with respect to the shaft 23 is difficult.

FIG. 11 is a sectional view of the rotor 20 according to a third modification. The rotor 20 according to the third modification is different from the rotor 20 shown in FIG. 9 in that a center hole 23b is formed at the counter load side end of the shaft 23.

When the shaft 23 in which the insulating sleeve 26 is inserted, the rotor resin magnet 22, and the resin magnet for position detection 25 are integrated (molded) by the resin section 24, the coaxiality of the rotor resin magnet 22 and the shaft 23 is improved by setting the center hole 23b of the shaft 23 in the die (the upper die).

FIG. 12 is a sectional view of the rotor 20 according to a fourth modification. The rotor 20 according to the fourth modification is different from the rotor 20 shown in FIG. 3 in that the insulating sleeve 26 is interposed between the load side roller bearing 21a and the shaft 23 as well to insulate the load side roller bearing 21a and the shaft 23.

By configuring the rotor 20 as shown in FIG. 12, it is possible to further reduce the shaft current in the load side roller bearing 21a. Further, it is possible to reduce, using a steel sheet frame in a section other than the mold stator 10, for example, the external hull, a shaft current of an electric motor in which brackets of metal are used on a load side and a counter load side.

In the rotor 20 shown in FIG. 11, the configuration of the counter load side end 23d of the shaft 23 is the same as the configuration shown in FIG. 3. However, the other configurations shown in FIGS. 8, 9, and 11 can be adopted.

In the electric motor 100 shown in FIG. 1, the mold stator 10 side is the load side and the bracket 30 side is the counter load side. However, the load side and the counter load side can be opposite.

In the rotor 20 shown in FIGS. 3, 8, 9, 11, and 12, the rotor resin magnet 22 molded by mixing the magnetic material in the thermoplastic resin is used as the permanent magnet. However, other permanent magnets (rare earth magnets (neodymium and samarium cobalt), ferrite, etc.) can be used.

Similarly, the other permanent magnets (rare earth magnets (neodymium and samarium cobalt), ferrite, etc.) can be used as the resin magnet for position detection 25.

As explained above, when an electric motor is operated using an inverter, for the purpose of realizing a reduction in noise of the electric motor caused according to switching of transistors in a power circuit, the carrier frequency of the inverter is set high. As the carrier frequency is set higher, a shaft voltage generated based on high-frequency induction in a shaft of the electric motor increases and a potential difference present between an inner ring and an outer ring of a roller bearing that supports the shaft increases. Therefore, an electric current easily flows to the roller bearing. The electric current flowing to the roller bearing causes corrosion called electrolytic corrosion on both tracks of the inner ring and the outer ring and a rolling contact surface of a rolling element (a ball or a roller that rolls between the inner and outer rings) and deteriorates the durability of the roller bearing.

Therefore, the rotor 20 according to this embodiment is particularly effective for a reduction in the shaft current when the electric motor 100 is operated using the inverter.

FIG. 13 is a configuration diagram of the driving circuit 200 that drives the electric motor 100. As shown in FIG. 13, the driving circuit 200 of an inverter system includes a position detecting circuit 110, a waveform generating circuit 120, a pre-driver circuit 130, and a power circuit 140.

The position detecting circuit 110 detects a magnetic pole of the resin magnet for position detection 25 of the rotor 20 using the Hall IC 49b.

The waveform generating circuit 120 generates, based on a speed instruction signal for instructing rotating speed of the rotor 20 and a position detection signal from the position detecting circuit 110, a PWM (Pulse Width Modulation) signal for performing inverter driving and outputs the PWM signal to the pre-driver circuit 130.

The pre-driver circuit 130 outputs a transistor driving signal for driving transistors 141 (six) of the power circuit 140.

The power circuit 140 includes a direct-current power supply input section and arms including inverter output sections and formed by connecting the transistors 141 and diodes 142 in parallel and further connecting the connected transistors 141 and diodes 142 in series.

Because the electric motor 100 has the three phases, the inverter output sections of three arms are connected to the respective coils 42. Direct-current power supplies +, - of 140 V or 280 V obtained by rectifying alternating-current 100 V or 200 V of a commercial power supply are connected to the direct-current power supply input section.

When the speed instruction signal is input to the driving circuit 200, the waveform generating circuit 120 sets electric conduction timing to the coils 42 of the three phases according to the position detection signal and generates and outputs a PWM signal corresponding to the input of the speed instruction signal. The pre-driver circuit 130 that receives the input of the PWM signal drives the transistors 141 in the power circuit 140.

The inverter output sections drive the transistors 141 to apply a voltage to the coils 42. An electric current flows to the coils 42, torque is generated, and the rotor 20 rotates. The electric motor 100 rotates at rotating speed corresponding to the speed instruction signal. The electric motor 100 is also stopped according to the speed instruction signal.

A manufacturing process for the rotor 20 is shown in FIG. 14.
(1) Molding and demagnetization of the resin magnet for resin (the resin section 24), all the components are set in the die and resin-molded. Therefore, a reduction in costs of the rotor 20 can be realized through a reduction in work processes.

The resin magnet for position detection 25 can be separated from the end face of the rotor resin magnet 22 by the pedestals 22b of the rotor resin magnet 22. The thickness of the resin magnet for position detection 25 can be minimized and the resin magnet for position detection 25 can be arranged in an arbitrary position. Costs can be reduced by filling the thermoplastic resin more inexpensive than the rotor resin magnet 22.

Because the resin magnet for position detection 25 is symmetrical in the thickness direction, the resin magnet for position detection 25 can be set in the die without adjusting the direction of the resin magnet for position detection 25.

A section where the outer circumference passes when the resin magnet for position detection 25 for the lower die is set is tapered to be wide in an opening (the taper section 24b of the resin section 24). Therefore, because the resin magnet for position detection 25 can be set without being caught by the lower die, it is possible to reduce costs according to improvement of productivity through simplification of a work process.

When the resin magnet for position detection 25 is set in the lower die, the inner circumference is held by the inner-circumference pressing section provided in the lower die. Consequently, the accuracy of the coaxiality of the shaft 23 and the rotor resin magnet 22 is secured.

The cutout pressing section provided in the upper die presses the cutouts 22a provided in the inner circumference of the rotor resin magnet 22. Consequently, the accuracy of the coaxiality of the shaft 23 and the rotor resin magnet 22 is secured.

As explained above, in this embodiment, the insulating sleeve 26 is interposed between the counter load side roller bearing 21b supported by the bracket 30 of metal (having electric conductivity) and the shaft 23. The insulating sleeve 26 is integrated with the resin section 24. The counter load side roller bearing 21b and the shaft 23 are insulated by the insulating sleeve 26 and the shaft current is suppressed. Consequently, it is possible to suppress occurrence of electrolytic corrosion of the counter load side roller bearing 21b. However, the same effect can be obtained when the ring-like resin magnet for position detection 25 is integrated together with the shaft 23 and the ring-like rotor resin magnet 22 by the resin section 24.

The step section 24e is provided between the center cylindrical section 24g of the resin section 24, which is formed in the outer circumference of the center section 23e of the shaft 23, and the bearing contact surface 24d. Consequently, when the shaft 23, the rotor resin magnet 22, and the resin magnet for position detection 25 are integrally molded by the resin, if the counter load side bearing contact surface 24d of the center cylindrical section 24g of the resin section 24 is formed by a bush, the bearing contact surface 24d is formed by the bush up to the step section 24e. Therefore, the fitting surface of the die becomes the counter load side end face 24h of the center cylindrical section 24g. Therefore, because the counter load side roller bearing 21b is separated from the counter load side end face 24h, which is the fitting surface of the die, by the thickness of the step section 24e, even if burrs occur on the fitting surface of the die, the burrs do not come into contact with the counter load side roller bearing 21b. Therefore, it is less likely that the counter load side roller bearing 21b is adversely affected.

In some case, when the rotor 20 receives a thermal shock, the center cylindrical section 24g of the resin section 24 is cracked. However, it is possible to cope with such a case by providing the step section 24e in the center cylindrical section 24g and increasing the thickness in the radial direction of the center cylindrical section 24g in the step section 24e.

As in the rotor 20 according to the first modification shown in FIG. 8, the center hole 23b is formed at the counter load side end of the shaft 23. Consequently, when the shaft 23, the rotor resin magnet 22, and the resin magnet for position detection 25 are integrally molded by the resin, the protrusion to be fit in the center hole 23b, the coaxiality of which with the shaft inserting section provided in the die (the upper die) is secured, is fit in the center hole 23b of the shaft 23. Therefore, it is possible to hold the shaft 23 in a state in which the coaxiality is secured. The coaxiality of the rotor resin magnet 22 and the shaft 23 is improved.

As in the rotor 20 according to the second modification shown in FIG. 9, the insulating sleeve 26 can cover the entire counter load side end 23d of the shaft 23. The insulating sleeve 26 is formed in the cap shape opened at one end in the axis direction and closed at the other end. Therefore, during the molding of the rotor 20 by the resin section 24, the end face 26c of the insulating sleeve 26 is pressed by the die.

As in the rotor 20 according to the third modification shown in FIG. 11, the insulating sleeve 26 covers the entire counter load side end 23d of the shaft 23 and the center hole 23b is formed at the counter load side end of the shaft 23. Therefore, when the shaft 23 in which the insulating sleeve 26 is inserted, the rotor resin magnet 22, and the resin magnet for position detection 25 are integrated (molded) by the resin section 24, the center hole 23b of the shaft 23 is set in the die (the upper die). Consequently, the coaxiality of the rotor resin magnet 22 and the shaft 23 is improved.

As in the rotor 20 according to the fourth modification shown in FIG. 12, the insulating sleeve 26 is interposed between the load side roller bearing 21a and the shaft 23 as well to insulate the load side roller bearing 21a and the shaft 23. Consequently, it is possible to further reduce the shaft current in the load side roller bearing 21a. It is possible to set the carrier frequency of the inverter higher. Further, it is possible to reduce, using a steel sheet frame in a section other than the mold stator 10, for example, the external hull, a shaft current of an electric motor in which brackets of metal are used on a load side and a counter load side.

When an electric motor is operated using an inverter, for the purpose of realizing a reduction in noise of the electric motor, the carrier frequency of the inverter is set high. As the carrier frequency is set higher, a shaft voltage generated based on high-frequency induction in a shaft of the electric motor increases and a potential difference present between an inner ring and an outer ring of a roller bearing that supports the shaft increases. Therefore, an electric current flowing to the roller bearing also increases. Therefore, the rotor 20 according to this embodiment is particularly effective for a reduction in the shaft current generated when the electric motor 100 is operated using the inverter. A method of detecting the magnetic pole of the resin magnet for position detection 25 of the rotor 20 using the Hall IC 49b, which is a sensor for detecting the magnetic pole, is explained above. However, it goes without saying that the same effect is obtained in a sensor-less driving system for, without using the resin magnet for position detection 25, providing the driving circuit 200 on the outside of the electric motor 100, detecting an electric current flowing through the coils using a current detector (not shown in the figures), and operating the electric motor 100 using a microcomputer or the like in the waveform generating circuit 120.

With the manufacturing process shown in FIG. 14, when the rotor resin magnet 22, the shaft 23 in which the insulating sleeve 26 is inserted, and the resin magnet for position detection 25 are integrated by the resin (the resin section 24), all the components are set in the die and resin-molded. Therefore, a reduction in costs of the rotor 20 can be realized through a reduction in work processes.

The resin magnet for position detection 25 can be separated from the end face of the rotor resin magnet 22 by the pedestals 22b of the rotor resin magnet 22. The thickness of the resin magnet for position detection 25 can be minimized and the resin magnet for position detection 25 can be arranged in an arbitrary position. Costs can be reduced by filling the thermoplastic resin more inexpensive than the rotor resin magnet 22.

Because the resin magnet for position detection 25 is symmetrical in the thickness direction, the resin magnet for position detection 25 can be set in the die without adjusting the direction of the resin magnet for position detection 25 and the rotor resin magnet 22, machining of the shaft 23, and molding of the insulating sleeve 26 are performed (step 1).
(2) The resin magnet for position detection 25 is set in the lower die with the end having the step 25b faced down to cause the inner-circumference pressing section provided in the lower die to hold the inner circumference of the resin magnet for position detection 25 (step 2).
(3) The positioning protrusions 22c of the rotor resin magnet 22 are fit in a positioning protrusion inserting section provided in the lower die and are set in the lower die (step 3).
(4) The shaft 23 in which the insulating sleeve 26 is inserted is set in the lower die and the cutouts 22a of the rotor resin magnet 22 are pressed by a cutout pressing section of the upper die to be closed (step 4).
(5) The resin (the resin section 24) is molded (step 5). When the rotor resin magnet 22, the resin magnet for position detection 25, and the shaft 23 are integrally molded by the resin section 24, the integral molding is performed such that the resin section 24 is interposed between the shaft 23 and at least one of the load side roller bearing 21a and the counter load side roller bearing 21b.
(6) Magnetization of the resin magnet for position detection 25 and the rotor resin magnet 22 is performed (step 6).
(7) The load side roller bearing 21a and the counter load side roller bearing 21b are assembled to the shaft 23 (step 7).

With the manufacturing process explained above, when the rotor resin magnet 22, the shaft 23, and the resin magnet for position detection 25 are integrated by the position detection 25.

A section where the outer circumference passes when the resin magnet for position detection 25 for the lower die is set is tapered to be wide in an opening (the taper section 24b of the resin section 24). Therefore, because the resin magnet for position detection 25 can be set without being caught by the lower die, it is possible to reduce costs according to improvement of productivity through simplification of a work process.

When the resin magnet for position detection 25 is set in the lower die, the inner circumference is held by the inner-circumference pressing section provided in the lower die. Consequently, the accuracy of the coaxiality of the shaft 23 and the rotor resin magnet 22 is secured.

The cutout pressing section provided in the upper die presses the cutouts 22a provided in the inner circumference of the rotor resin magnet 22. Consequently, the accuracy of the coaxiality of the shaft 23 and the rotor resin magnet 22 is secured.

### Second Embodiment.

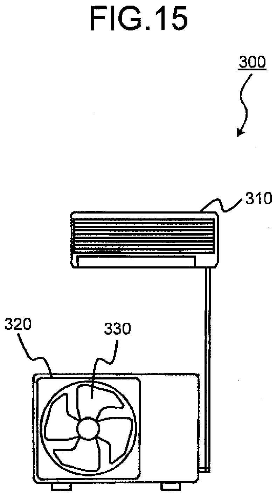

FIG. 15 is a diagram showing a second embodiment and is a configuration diagram of an air conditioner 300.

The air conditioner 300 includes indoor equipment 310 and outdoor equipment 320 connected to the indoor equipment 310. A fan for indoor equipment (not shown in the figure) is mounted on the indoor equipment 310. A fan for outdoor equipment 330 is mounted on the outdoor equipment 320.

The fan for outdoor equipment 330 and the fan for indoor equipment include the electric motor 100 according to the first embodiment as a driving source.

The electric motor 100 according to the first embodiment is mounted on the fan for outdoor equipment 330 and the fan for indoor equipment, which are main components of the air conditioner 300. Consequently, the durability of the air conditioner 300 is improved.

### Industrial Applicability

As application examples of the electric motor 100 according to the present invention, the electric motor 100 can be used while being mounted on a ventilation fan, a household electric appliance, a machine tool, or the like.

### Reference Signs List

10 MOLD STATOR
10a INNER CIRCUMFERENTIAL SECTION
11 BEARING SUPPORTING SECTION
20 ROTOR
21a LOAD SIDE ROLLER BEARING
21a-1 INNER RING
21a-2 OUTER RING
21a-3 ROLLING ELEMENT
21b COUNTER LOAD SIDE ROLLER BEARING
21b-1 INNER RING
21b-2 OUTER RING
21b-3 ROLLING ELEMENT
22 ROTOR RESIN MAGNET
22a CUTOUTS
22b PEDESTALS
22c POSITIONING PROTRUSIONS
23 SHAFT
23a KNURL
23b CENTER HOLE
23c STEP
23d COUNTER LOAD SIDE END
23f COUNTER LOAD SIDE END FACE
24 RESIN SECTION
24a INNER-CIRCUMFERENCE PRESSING SECTION
24b TAPER SECTION
24c RESIN INJECTING SECTION
24d CONTACT SURFACE
24e STEP SECTION
24g CENTER CYLINDRICAL SECTION
24h COUNTER LOAD SIDE END FACE
25 RESIN MAGNET FOR POSITION DETECTION
25a RIBS
25b STEP
26 INSULATING SLEEVE
26a OUTER CIRCUMFERENTIAL SECTION
26b BRIM SECTION
26b-1 CUTOUT SECTIONS
26c END FACE
30 BRACKET
30a BEARING SUPPORTING SECTION
30b PRESS-FITTING SECTION
40 STATOR
41 STATOR IRON CORE
42 COILS
43 INSULATING SECTION
44 TERMINALS
44a POWER SUPPLY TERMINALS
44b NEUTRAL TERMINALS
45 SUBSTRATE
46 LEAD WIRE LEADING COMPONENT
47 LEAD WIRE
48 SQUARE PILLAR
49a IC
49b HALL IC
50 MOLD RESIN
100 ELECTRIC MOTOR
110 POSITION DETECTING CIRCUIT
120 WAVEFORM GENERATING CIRCUIT
130 PRE-DRIVER CIRCUIT
140 POWER CIRCUIT
141 TRANSISTORS
142 DIODES
200 DRIVING CIRCUIT
300 AIR CONDITIONER
310 INDOOR EQUIPMENT
320 OUTDOOR EQUIPMENT
330 FAN FOR OUTDOOR EQUIPMENT

## Claims

1. An electric motor rotor (20) in which a rotor magnet and a shaft (23) are integrated by a resin section (24) and roller bearings (21a, 21b) are arranged on the shaft, **characterised in that** an insulating sleeve (26) is provided between the shaft and the roller bearings, wherein the insulating sleeve has a brim section (26b) protruding into the resin section (24) and covered with the resin section (24), the insulating sleeve being fixed integrally with the resin section.

2. The electric motor rotor according to claim 1, wherein the roller bearings (21a, 21b) include a load side roller bearing (21a) and a counter roller side roller bearing (21b), the electric motor rotor is configured such that the insulating sleeve (26) is interposed between at least one of the load side roller bearing and the counter load side roller bearing and the shaft.

3. The electric motor rotor according to claim 2, wherein the electric motor rotor is configured such that the insulating sleeve (26) is interposed between one roller bearing supported by a bracket of metal (30), which is either one of the load side roller bearing (21a) and the counter load side roller bearing (21b), and the shaft.

4. The electric motor rotor according to claim 3, wherein the insulating sleeve includes, at one end, the brim section (26b) having a diameter larger than an outer circumferential section of the insulating sleeve and, when the insulating sleeve is integrated by the resin section, the resin section integrates the brim section.

5. The electric motor rotor according to claim 4, wherein the brim section (26b) of the insulating sleeve includes cutout sections (26b-1).

6. The electric motor rotor according to any one of claims 1 to 5, wherein a bearing contact surface (24d), which serves as a positioning reference in an axis direction during insertion of the roller bearing onto the shaft, is formed at an end of a center cylindrical section (24g) of the resin section formed in an outer circumference centering on a knurl section (23a) of the shaft.

7. The electric motor rotor according to any one of claims 1 to 6, wherein, in a center cylindrical section (24g) of the resin section (24) formed in an outer circumference centering on a knurl section (23a) of the shaft, a step section (24e) having a diameter smaller than an inner diameter of an outer ring of the roller bearing is provided between an outer circumferential section of the center cylindrical section and the bearing contact surface (24d).

8. The electric motor rotor according to any one of claims 1 to 7, wherein the insulating sleeve covers at least a part of an axis direction end face of the shaft.

9. The electric motor rotor according to any one of claims 1 to 8, wherein the shaft includes a center hole (23b) at least at one of axis direction both ends.

10. The electric motor rotor according to any one of claims 1 to 9, wherein the insulating sleeve is a mixture of a glass filler and thermoplastic resin.

11. An electric motor comprising the electric motor rotor according to any one of claims 1 to 10.

12. The electric motor according to claim 11, comprising a driving circuit (200) of an inverter system including:
a position detecting circuit (110) configured to detect a magnetic pole of the rotor using a position detecting element;
a waveform generating circuit (120) configured to generate, based on a speed instruction signal for instructing rotating speed of the rotor and a position detection signal from the position detecting circuit, a PWM (Pulse Width Modulation) signal for performing inverter driving;
a pre-driver circuit (130) configured to generate a driving signal according to an output of the waveform generating circuit; and
a power circuit (140) including arms formed by connecting transistors (141) and diodes (142) in parallel and further connecting the connected transistors and diodes in series.

13. An air conditioner comprising the electric motor according to claim 11 or 12, wherein the electric motor is used for driving a fan (330).

14. A method of manufacturing an electric motor rotor having a rotor magnet and a shaft (23) that are integrally molded by a resin section (24), and roller bearings (21a, 21b) arranged on the shaft (23), the method being **characterised by**:
inserting an insulating sleeve (26) onto the shaft (23) and
assembling one of the roller bearings (21a,21b) to the shaft (23) with the insulating sleeve (26) being inserted between the shaft and the one of the roller bearings, and performing resin molding to provide the resin section (24) covering a brim portion (26b) of the insulating sleeve (26) such that the insulating sleeve (26) is fixed integrally with the resin section (24), with the brim portion (26b) protruding into the resin section.

## Patentansprüche

1. Elektromotor-Rotor (20), in welchem ein Rotormagnet und eine Welle (23) durch einen Harzabschnitt (24) integriert sind, und Wälzlager (21a, 21b) auf der Welle angeordnet sind, **dadurch gekennzeichnet, dass**
eine Isolierhülse (26) zwischen der Welle und den Wälzlagern bereitgestellt ist, wobei die Isolierhülse einen Randabschnitt (26b) aufweist, der in den Harzabschnitt (34) hineinragt und mit dem Harzabschnitt (24) bedeckt ist, wobei die Isolierhülse am Harzabschnitt integral fixiert ist.

2. Elektromotor-Rotor nach Anspruch 1, wobei die Wälzlager (21a, 21b) ein lastseitiges Wälzlager (21) und ein gegen-rollseitiges Wälzlager (21b) enthalten, wobei der Elektromotor-Rotor so ausgelegt ist, dass die Isolierhülse (26) zwischen zumindest einem des lastseitigen Wälzlagers und des gegenlastseitigen Wälzlagers und der Welle angeordnet ist.

3. Elektromotor-Rotor nach Anspruch 2, wobei der Elektromotor-Rotor so ausgelegt ist, dass die Isolierhülse (26) zwischen einem Wälzlager, das durch einen Bügel aus Metall (30) gestützt ist, welcher entweder das lastseitige Wälzlager (21a) oder das gegenlastseitige Wälzlager (21b) ist, und der Welle angeordnet ist.

4. Elektromotor-Rotor nach Anspruch 3, wobei die Isolierhülse an einem Ende den Randabschnitt (26b) enthält, der einen Durchmesser aufweist, der größer ist als ein Außenumfangsabschnitt der Isolierhülse, und, wenn die Isolierhülse durch den Harzabschnitt integriert ist, der Harzabschnitt den Randabschnitt integriert.

5. Elektromotor-Rotor nach Anspruch 4, wobei der Randabschnitt (26b) der Isolierhülse ausgeschnittene Abschnitte (26b-1) enthält.

6. Elektromotor-Rotor nach einem der Ansprüche 1 bis 5, wobei eine Lagerkontaktfläche (24d), welche als eine Positionierungsreferenz in einer Achsenrichtung während des Einlegens des Wälzlagers auf die Welle dient, an einem Ende eines mittleren zylindrischen Abschnitts (24g) des Harzabschnitts ausgebildet ist, der in einem Außenumfang ausgebildet ist, der in einem auf einem Rändelabschnitt (23a) der Welle zentrierenden äußeren Umfang gebildet ist.

7. Elektromotor-Rotor nach einem der Ansprüche 1 bis 6,
wobei in einem mittleren zylindrischen Abschnitt (24g) des Harzabschnitts (24), der in einem Außenumfang ausgebildet ist, der auf einem Rändelabschnitt (23a) der Welle zentriert ist, ein Stufenabschnitt (24e), der einen Durchmesser aufweist, der kleiner ist als ein Innendurchmesser eines äußeren Rings des Wälzlagers, zwischen einem Außenumfangsabschnitt des mittleren zylindrischen Abschnitts und der Lagerkontaktfläche (24d) bereitgestellt ist.

8. Elektromotor-Rotor nach einem der Ansprüche 1 bis 7, wobei die Isolierhülse zumindest einen Teil einer Achsenrichtungsendfläche der Welle bedeckt.

9. Elektromotor-Rotor nach einem der Ansprüche 1 bis 8, wobei die Welle ein Mittenloch (23b) zumindest an einem der beiden Achsenrichtungsenden enthält.

10. Elektromotor-Rotor nach einem der Ansprüche 1 bis 9, wobei die Isolierhülse ein Gemisch aus einem Glasfüllstoff und thermoplastischem Harz ist.

11. Elektromotor, umfassend den Elektromotor-Rotor nach einem der Ansprüche 1 bis 10.

12. Elektromotor nach Anspruch 11, umfassend eine Treiberschaltung (200) eines Wechselrichtersystems, das enthält:
eine Positionsdetektionsschaltung (110), die ausgelegt ist, um einen Magnetpol des Rotors unter Verwendung eines Positionsdetektionselements zu detektieren;
eine Wellenformerzeugungsschaltung (120), die ausgelegt ist, um auf Grundlage eines Geschwindigkeitsanweisungssignals zum Anweisen der Rotationsgeschwindigkeit des Rotors und eines Positionsdetektionssignals von der Positionsdetektionsschaltung ein PWM-(Pulsweitenmodulation)-Signal zum Durchführen des Wechselrichterantriebs zu erzeugen;
eine Vortreiberschaltung (130), die ausgelegt ist, um ein Treibersignal entsprechend einer Ausgabe der Wellenformerzeugungsschaltung zu erzeugen; und
eine Leistungsschaltung (140), die Zweige enthält, die durch Parallelschalten von Transistoren (141) und Dioden (142) und weiter durch In-Reihe-Schalten der geschalteten Transistoren und Dioden gebildet werden.

13. Klimaanlage, umfassend den Elektromotor nach Anspruch 11 oder 12, wobei der Elektromotor zum Antreiben eines Gebläses (330) verwendet wird.

14. Verfahren zum Herstellen eines Elektromotor-Rotors, der einen Rotormagneten und eine Welle (23) aufweist, die durch einen Harzabschnitt (24) integral ausgeformt sind, und Wälzlager (21a, 21b) aufweist, die auf der Welle (23) angeordnet sind, wobei das Verfahren **gekennzeichnet ist durch**:
Einlegen einer Isolierhülse (26) auf die Welle (23), und
Anbringen eines der Wälzlager (21a, 21b) an der Welle (23), wobei die Isolierhülse (26) zwischen der Welle und dem einen der Wälzlager eingelegt wird, und
Durchführen eines Harzgießvorgangs, um den Harzabschnitt (24) bereitzustellen, der einen Randabschnitt (26b) der Isolierhülse (26) bedeckt, so dass die Isolierhülse (26) am Harzabschnitt (24) integral fixiert wird, wobei der Randabschnitt (26b) in den Harzabschnitt hineinragt.

## Revendications

1. Rotor (20) de moteur électrique dans lequel un aimant de rotor et un arbre (23) sont intégrées par une section de résine (24) et des paliers à rouleaux (21a, 21b) sont agencés sur l'arbre, **caractérisé en ce que** :
un manchon isolant (26) est prévu entre l'arbre et les paliers à rouleaux, dans lequel le manchon isolant a une section de bord (26b) faisant saillie dans la section de résine (24) et recouverte avec la section de résine (24), le manchon isolant étant fixé de manière solidaire avec la section de résine.

2. Rotor de moteur électrique selon la revendication 1, dans lequel les paliers à rouleaux (21a, 21b) comprennent un palier à rouleaux du côté de la charge (21a) et un palier à rouleaux du côté du contre-rouleau (21b), le rotor de moteur électrique est configuré de sorte que le manchon isolant (26) est intercalé entre au moins l'un parmi le palier à rouleaux du côté de la charge et le palier à rouleaux du côté de la contre-charge et l'arbre.

3. Rotor de moteur électrique selon la revendication 2, dans lequel le rotor de moteur électrique est configuré de sorte que le manchon isolant (26) est intercalé entre un palier à rouleaux supporté par une console en métal (30), qui est l'un parmi le palier à rouleaux du côté de la charge (21a) et le palier à rouleaux du côté de la contre-charge (21b), et l'arbre.

4. Rotor de moteur électrique selon la revendication 3, dans lequel le manchon isolant comprend, au niveau d'une extrémité, la section de bord (26b) ayant un diamètre supérieur à une section circonférentielle externe du manchon isolant, et lorsque le manchon isolant est intégré par la section de résine, la section de résine intégre la section de bord.

5. Rotor de moteur électrique selon la revendication 4, dans lequel la section de bord (26b) du manchon isolant comprend des sections découpées (26b-1).

6. Rotor de moteur électrique selon l'une quelconque des revendications 1 à 5, dans lequel une surface de contact de palier (24d), qui sert de référence de positionnement dans une direction axiale pendant l'insertion du palier à rouleaux sur l'arbre, est formée à une extrémité d'une section cylindrique centrale (24g) de la section de résine formée dans une circonférence externe se centrant sur une section de molette (23a) de l'arbre.

7. Rotor de moteur électrique selon l'une quelconque des revendications 1 à 6, dans lequel, dans la section cylindrique centrale (24g) de la section de résine (24) formée dans une circonférence externe se centrant sur une section de molette (23a) de l'arbre, une section de gradin (24e) ayant un diamètre inférieur à un diamètre interne d'une bague externe du palier à rouleaux, est prévue entre une section circonférentielle externe de la section cylindrique centrale et la surface de contact de palier (24d).

8. Rotor de moteur électrique selon l'une quelconque des revendications 1 à 7, dans lequel le manchon isolant recouvre au moins une partie d'une face d'extrémité dans la direction axiale de l'arbre.

9. Rotor de moteur électrique selon l'une quelconque des revendications 1 à 8, dans lequel l'arbre comprend un trou central (23b) au moins au niveau de l'une des deux extrémités dans la direction axiale.

10. Rotor de moteur électrique selon l'une quelconque des revendications 1 à 9, dans lequel le manchon isolant est réalisé avec un mélange d'une matière de remplissage de verre et une résine thermoplastique.

11. Moteur électrique comprenant le rotor de moteur électrique selon l'une quelconque des revendications 1 à 10.

12. Moteur électrique selon la revendication 11, comprenant un circuit d'entraînement (200) d'un système d'inverseur comprenant :
un circuit de détection de position (110) configuré pour détecter un pôle magnétique du rotor en utilisant un élément de détection de position ;
un circuit de génération de forme d'onde (120) configuré pour générer, en fonction d'un signal d'instruction de vitesse pour indiquer la vitesse de rotation du rotor et d'un signal de détection de position provenant du circuit de détection de position, un signal PWM (modulation d'impulsion en durée) pour réaliser l'entraînement d'inverseur ;
un circuit de pré-entraînement (130) configuré pour générer un signal d'entraînement selon un résultat du circuit de génération de forme d'onde ; et
un circuit de puissance (140) comprenant des bras formés en raccordant des transistors (141) et des diodes (142) en parallèle et en raccordant en outre les transistors et les diodes en série.

13. Climatisation comprenant le moteur électrique selon la revendication 11 ou 12, dans lequel le moteur électrique est utilisé pour entraîner un ventilateur (330).

14. Procédé pour fabriquer un rotor de moteur électrique ayant un aimant de rotor et un arbre (23) qui sont moulés de manière solidaire par une section de résine (24) et les paliers à rouleaux (21a, 21b) agencés sur l'arbre (23), le procédé étant **caractérisé par** les étapes consistant à :
insérer un manchon isolant (26) sur l'arbre (23), et
assembler l'un des paliers à rouleaux (21a, 21b) à l'arbre (23) avec le manchon isolant (26) qui est inséré entre l'arbre et l'un des paliers à rouleaux, et réaliser le moulage de résine pour fournir la section de résine (24) recouvrant une partie de bord (26b) du manchon isolant (26) de sorte que le manchon isolant (26) est fixé de manière solidaire avec la section de résine (24), avec la partie de bord (26b) qui fait saillie dans la section de résine.
